# EUROPEAN PATENT APPLICATION

(11) **EP 4 819 004 A1**
(43) Date of publication of application: **07.10.2026**
(21) Application number: 26163550.2
(22) Date of filing: 10.03.2026
(51) Int. Cl.: G06Q 10/20

(54) **ELECTRONIC DEVICE LOGISTICS AND TESTING SYSTEM**

(30) Priority: 02.04.2025 US 202563782109 P; 28.11.2025 US 202519403419; 28.11.2025 US 202519403368
(71) Applicant: Communications Test Design, Inc., West Chester, PA 19380 (US)
(72) Inventor: PARSONS, Mark, West Chester, 19380 (US); PATEL, Krutarth, West Chester, 19380 (US); JOSEPH, Thomas Pulickal, West Chester, 19380 (US); CANAVATI, George, West Chester, 19380 (US); DEVATT, Roy, West Chester, 19380 (US); KNOTT, William, West Chester, 19380 (US); DOMSOHN, Jaclyn, West Chester, 19380 (US); DHADUTI, Kshama, West Chester, 19380 (US); DAVIS, Nidhin, West Chester, 19380 (US)
(74) Representative: Purdylucey Intellectual Property

(57) **Abstract**

An electronic device speaker and microphone test station is shown and described. The speaker and microphone test station for evaluating audio components of electronic devices includes a movable housing configured to form a sound-isolated chamber over a device positioned on a magnetic movement table. The system initiates playback of predefined audio signals from the device's speakers and simultaneously records the output using the device's microphones. A computing system analyzes the recorded signals by comparing them to expected waveforms to determine audio fidelity and functionality. Multiple speaker-microphone combinations are tested, and results are recorded and optionally uploaded to a remote database. The station enables automated, repeatable, and acoustically controlled testing without requiring external audio hardware.

## Description

### CROSS REFERENCE TO RELATED APPLICATIONS

This application claims the benefit of U.S. NonProvisional Application No, 19/403,419 filed on November 28, 2025, which is a divisional of U.S. Patent Application No. 19/403,368, filed on November 28, 2025, which claims the benefit of U.S. Provisional Application No. 63/782,109 filed on April 2, 2025. The above identified patent application is herein incorporated by reference in its entirety to provide continuity of disclosure.

### BACKGROUND OF THE INVENTION

Technology is always advancing, and it has done so rapidly over the last several decades. Technology has become more sophisticated, smaller, and accessible worldwide. This has led to technology becoming integral in everyday life. As with any integral element of life, the demand is high. This high demand has driven up the cost of technological devices.

In addition to high demand, replacing devices can be expensive. If one merely discards older or minor-defect equipment for a brand-new piece, the cost can escalate quickly. If, however, technology is upgraded or repaired, this process can be much more cost-effective for both the company and the consumer.

Currently, to repair, repurpose, or resell many electronic devices, they must be functionally tested. In many instances, this leads to the need for many different human interactions. In some cases, the tests are also subjective based on a tester performing the same action in the proper manner for each test. Each time a user handles a device, there is an increased risk of lowering its value. However, in many instances, accurately tested phones have a significant upside.

Many companies have been adopting the repair instead of discard philosophy. Further, many consumers are happy to purchase a lightly used and repaired device rather than a brand-new one. However, these processes come with new challenges to remain effective. Consequently, there is always a need for improvement in the art.

### SUMMARY OF THE INVENTION

The present invention, as set out in the appended claims, provides an electronic device logistics and testing system wherein the same can be utilized for delivering speed, accuracy, and efficiency to an electronic device testing operation without the need for repeated human touches in the process.. The system for testing electronic devices includes a magnetic movement table. A plurality of modular test stations positioned around the magnetic movement table. At least one magnetic mover configured to transport an electronic device across the magnetic movement table. A securement station configured to secure the electronic device to the magnetic mover. A computing system configured to:
upload a testing application to the electronic device;
determine a list of tests to be performed on the electronic device;
route the electronic device to a next available test station;
record results of each test; and
remove the electronic device from the magnetic movement table upon completion or failure of testing.

Another object of the system for testing electronic devices is to have the magnetic mover comprise a near field communicator (NFC) configured to test NFC functionality of the electronic device.

Another object of the system for testing electronic devices is to have the modular test stations include at least one of:
a touchscreen test station,
a screen pixel check station,
a speaker and microphone test station,
a button test station,
a front camera test station, and
a rear camera test station.

Another object of the system for testing electronic devices is to have the magnetic movement table be configured to autonomously navigate the magnetic mover to each modular test station based on real-time availability and test priority.

Another object of the system for testing electronic devices is to have an automatic infeed station and an automatic outfeed station operably coupled to the magnetic movement table, wherein the infeed station receives electronic devices for testing and the outfeed station removes tested devices without human intervention.

Another object of the system for testing electronic devices is to have the computing system be configured to determine the next available test station by evaluating prerequisite tasks and station availability.

Another object of the system for testing electronic devices is to have the magnetic mover comprises:
a securement section having a plurality of side stoppers and a vise;
wherein the vise includes a compressible pressure device and a ratchet mechanism for securing the electronic device.

Another object of the system for testing electronic devices is to have the securement section include openings between the side stoppers to allow access to components of the electronic device.

Another object of the system for testing electronic devices is to have the vise includes stabilizing rods configured to prevent angular displacement during securement.

Another object of the system for testing electronic devices is to have a method for testing an electronic device including uploading a testing application to the electronic device. Placing the electronic device on a magnetic mover. Securing the electronic device to the magnetic mover using a securement station. Determining a list of tests to be performed. Routing the electronic device to a next available test station. Performing the test and recording results. Repeating the routing and testing steps until all tests are complete or a failure occurs. Removing the electronic device from the magnetic movement table.

Another object of the system for testing electronic devices is to have the method further include evaluating whether a test station is available. If available, moving the electronic device to the station. If unavailable, placing the electronic device in a waiting mode.

Another object of the system for testing electronic devices is to have the testing application enable the electronic device to act as a primary computing device during testing.

Another object of the method for testing electronic devices is to have the testing application communicate wirelessly with the computing system using a protocol selected from the group consisting of Wi-Fi and Bluetooth.

Another object of the system for testing electronic devices is to have, uploading test results from the electronic device to a remote database upon completion of testing.

Another object of the method for testing electronic devices is to have the magnetic mover move the electronic device in a grid pattern to facilitate interaction with a touchscreen test station.

Other objects, features, and advantages of the present invention will become apparent from the following detailed description taken in conjunction with the accompanying drawings.

### BRIEF DESCRIPTION OF THE DRAWINGS

The accompanying drawings are incorporated in and are to be considered part of the present specification. These drawings are meant to aid the reader's understanding and comprehension of the present disclosure and are depictions of various example embodiments. The drawings are not to be considered limiting upon the disclosure. It should specifically be noted that the drawings are examples and may not necessarily be drawn to scale.
FIG. 1 shows a block diagram of a computing system.
FIG. 2A shows a front view of an example of a mobile phone device.
FIG. 2B shows a rear view of an example of a mobile phone device.
FIG. 3A shows a perspective view of an embodiment of the electronic device logistics and testing system.
FIG. 3B shows a perspective view of an embodiment of the electronic device logistics and testing system.
FIG. 3C shows a perspective view of an embodiment of the electronic device logistics and testing system.
FIG. 4 shows a flow chart of an embodiment of a method for testing an electronic device using the testing system.
FIG. 5A shows a top-down view of an embodiment of a magnetic mover.
FIG. 5B shows a side view of an embodiment of the magnetic mover.
FIG. 6A shows a perspective view of an embodiment of a device securement station.
FIG. 6B shows a perspective view of an embodiment of a device securement station.
FIG. 7 shows a perspective view of an embodiment of a device securement station and magnetic mover.
FIG. 8 shows a perspective view of an embodiment of a touch screen testing station.
FIG. 9A shows a top-down view of an embodiment of the touch screen testing station in use.
FIG. 9B shows a top-down view of an embodiment of the touch screen testing station in use.
FIG. 10 shows a flow chart of an embodiment of a method of using the touch screen testing station.
FIG. 11A shows a perspective view of an embodiment of an electronic device screen pixel check station.
FIG. 11B shows a perspective view of an embodiment of the electronic device screen pixel check station.
FIG. 12 shows a flow chart of an embodiment of a method of using the electronic device screen pixel check station.
FIG. 13A shows a perspective view of an embodiment of a speaker and microphone test station.
FIG. 13B shows a perspective view of an embodiment of a speaker and microphone test station.
FIG. 14 shows a flow chart of an embodiment of a method of using the speaker and microphone test station.
FIG. 15 shows a top-down view of an embodiment of a button test station.
FIG. 16 shows a perspective view of an embodiment of the button test station.
FIG. 17A shows a perspective view of an embodiment of the button test station in use.
FIG. 17B shows a perspective view of an embodiment of the button test station in use.
FIG. 18A shows a top-down view of an embodiment of an electronic device front camera test station.
FIG. 18B shows a Bottom-up view of an embodiment of the electronic device front camera test station.
FIG. 19 shows a flow chart of an embodiment of a method of using the electronic device front camera test station.
FIG. 20 shows a perspective view of an embodiment of one part of the electronic device rear camera test station.
FIG. 21 a perspective view of an embodiment of an electronic device holder for the electronic device rear camera test station.
FIG. 22 shows a perspective view of an embodiment of one part of the electronic device rear camera test station.
FIG. 23 shows a flow chart of an embodiment of a method of using the electronic device rear camera test station.

### DETAILED DESCRIPTION OF THE INVENTION

For the purposes of presenting a brief and clear description of the present invention, a preferred embodiment will be discussed as used for the electronic device logistics and testing system. The figures are intended for representative purposes only and should not be considered to be limiting in any respect.

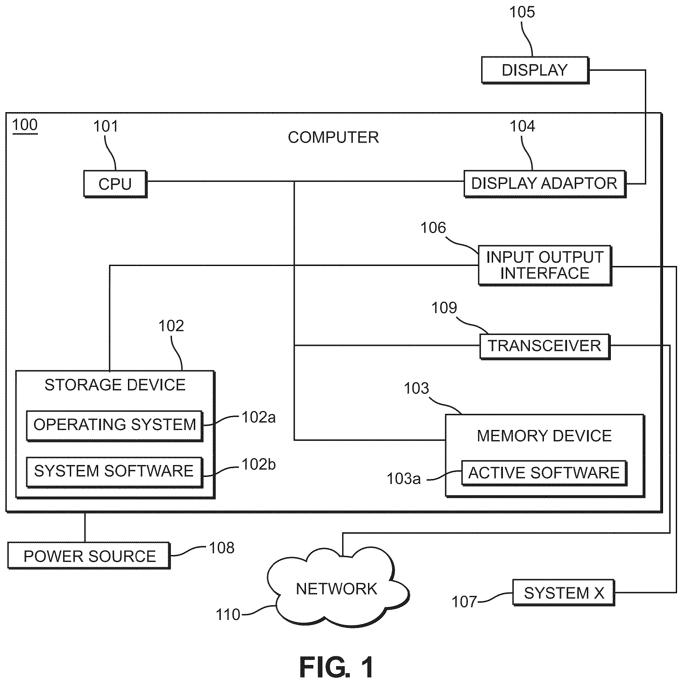

Referring now to FIG. 1, there is shown a block diagram of a computing system. Computing systems may have many interchangeable parts or multiples of some parts. One of ordinary skill in the art will understand that the shown computer 100 is a basic computing system that demonstrates a minimal number of parts to allow it to function. Computer 100 is exemplary, and one of ordinary skill in the art will recognize that computer 100 may be altered as necessary to render the presently disclosed system operable or to provide a peak performance of the disclosed system.

The parts described are each operably coupled together as necessary; one of ordinary skill in the art will understand how to connect general computer components, for example, by using a motherboard or other computer board. In the shown embodiment, the computer 100 includes a CPU 101. In one embodiment, the CPU 101 includes only one processor. In other embodiments, the CPU 101 may be composed of multiple processors. Different processors offer different levels of computing power and speed.

The computer 100 includes at least one storage device 102. In different embodiments, the at least one storage device 102 may be a solid-state storage device, a disk storage device, or another suitable storage device. One of ordinary skill in the art will recognize that there are several types of computing storage devices, each providing well-known benefits and drawbacks. The at least one storage device 102 will store at least the computer operating system 102a and system software 102b. System software 102b may include any software necessary, or optionally, used to run any system described herein.

Computer 100 will include at least one memory device 103. One of ordinary skill in the art will recognize that there are several types of computing memory devices, each providing well-known benefits and drawbacks. At least one memory device 103 will store the active software 103a. Active software 103a may include the operating system 102a or parts of the system software 102b. The at least one memory device 103 may store the entire system software 102b size and speed permitting.

The computer 100 may also include various connection ports and types. The computer 100 may have a display adaptor 104. The display adaptor 104 will allow the computer 100 to connect to at least one display 105. In other embodiments, multiple displays may be connected to the display adaptor 104. Similarly, the computer 100 may include at least one input/output interface 106. The input/output interface 106 will allow the computer 100 to connect to at least one system, referred to as System X 107 in FIG. 1. The input/output interface 106 may also allow connection to only part of System X 107 or to multiple systems. The computer 100 will also be operably connected to a required power source 108.

The computer 100 may also include a transceiver 109. In one embodiment, the transceiver 109 is wired. In another embodiment, the transceiver 109 is a wireless transceiver. The transceiver 109 will allow the computer 100 to connect to a network 110. The network 110 may be an internet or an intranet connection. Network 110 will enable computer 100 to connect to multiple other computing devices, potentially. In another embodiment, the network may allow the computer 100 to connect to various systems. In one embodiment, the computer 100 allows System X 107 to be connected to the network 110.

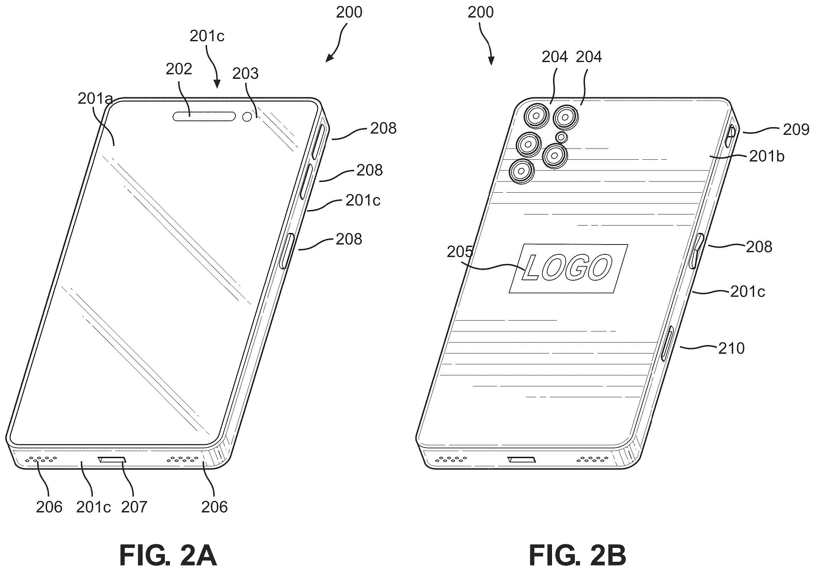

Referring now to FIG. 2A and FIG. 2B, there is shown a front view and a rear view of an example of an electronic device 200, such as a mobile phone device. Electronic devices may have many components. Even like parts or components may be in various locations or have different shapes and sizes. One of ordinary skill in the art will understand that the shown electronic device 200 is merely an example of the exterior of a device. Any specialized or specific features or requirements of devices will be detailed herein as necessary. However, one of ordinary skill in the art will understand that many electronic devices 200 have many of these described characteristics. Further, electronic devices, such as mobile phone devices, operate on a computer-based platform having many of the computer parts as described in FIG. 1. The following description seeks to detail external components and not the computer that runs the electronic device 200. The electronic device 200 can be, without limitation, a mobile phone device or a tablet. In one embodiment, other electronic devices may be used, such as laptops, cable set-top boxes, routers, or antennas.

The shown electronic device 200 includes a front surface 201a, a rear surface 201b, and four side surfaces 201c. The front surface 201a typically includes a screen that covers a majority of the surface. The screen is generally covered with a specialized material, currently a glass product. The front surface 201a may also include a speaker opening 202 and a camera opening 203.

The rear surface 201b of the electronic device 200 may include at least one camera lens 204. In the shown embodiment, there are a plurality of camera lenses 204. In another embodiment, at least one light lens is secured to the rear surface 201b. In many embodiments, the rear surface 201b includes a logo 205. The logo 205 may represent the company that created the electronic device 200. The rear surface 201b may include a coating or covering to decorate or protect it. For example, a coating may be applied to the rear surface 201b to ensure a shiny surface.

The side surfaces 201c of the electronic device 200 may include any or all of the following parts. In one embodiment, the electronic device 200 will have several openings for speaker output 206. The electronic device 200 will also include a charging port 207. Charging ports 207 may include a prong therein to secure to a charging cord. An electronic device 200 may include a plurality of buttons 208 along the side surfaces 201c. In different embodiments, the plurality of buttons 208 may provide volume control, lock the electronic device 200, or perform other desired functions. In some embodiments, the electronic device 200 may include a switch 209. In yet another embodiment, the electronic device 200 includes a SIM card slot or other card slot 210.

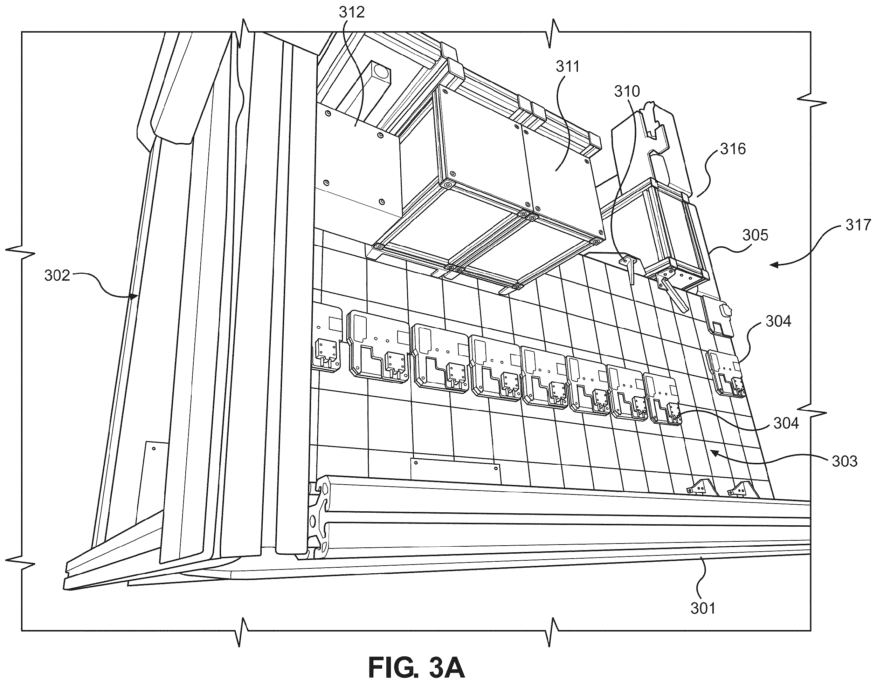

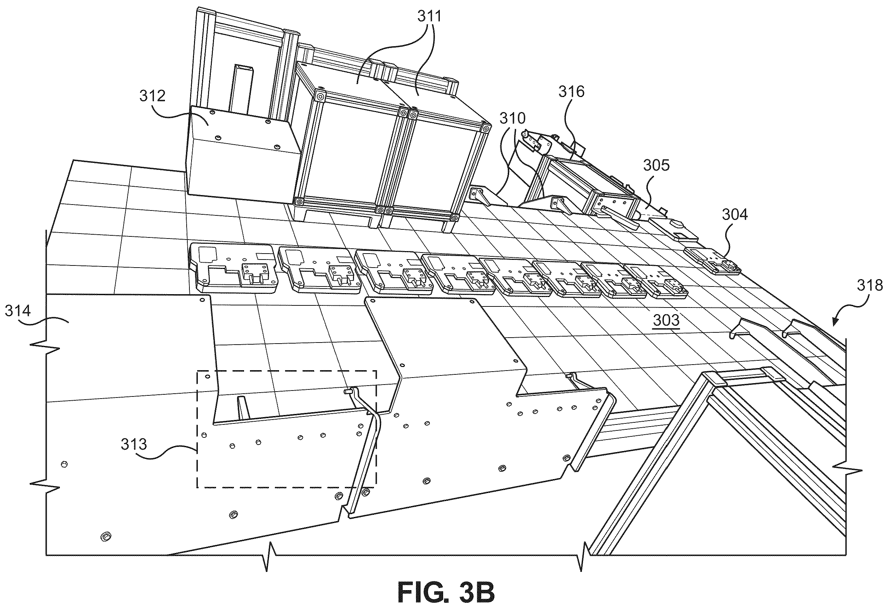

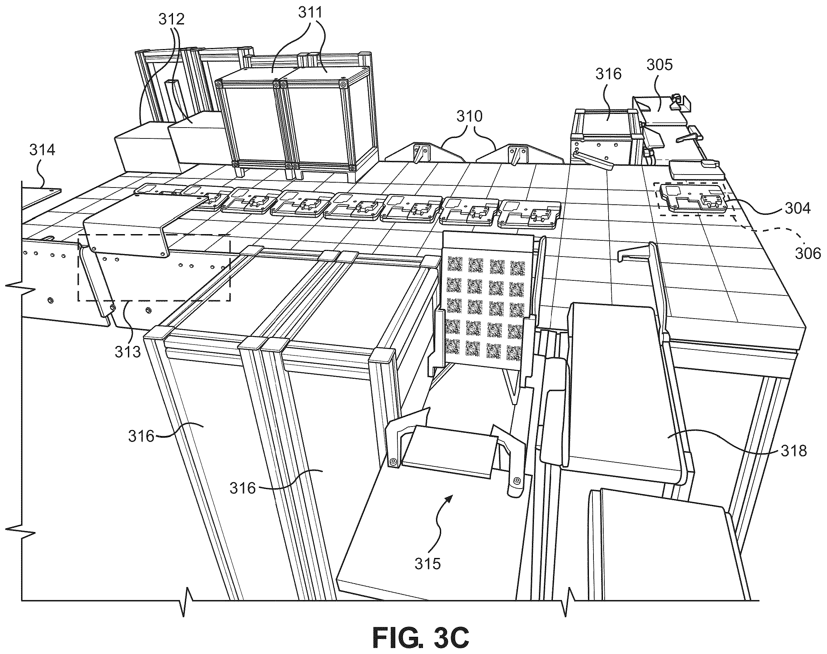

Referring now to FIG. 3A, FIG. 3B, and FIG. 3C, there are shown perspective views of an embodiment of the electronic device logistics and testing system. The device logistics and testing system is operably coupled to the computer of figure 1 as the system X described in FIG. 1. Further, any of the testing stations described herein could, in some embodiments, be coupled to a computer as described in FIG. 1 as system X. The device logistics and testing system comprises a frame 301. The frame creates a compartment 302 that can house various electronic components and power supplies.

Atop the frame 301, a magnetic movement table 303 is situated. The Logistics movement table is configured to support the movement of magnetic movers 304. These magnetic movers are configured to hold an electronic device thereon specially. In some embodiments, a user can place an electronic device onto the magnetic mover. In another embodiment, a first conveyor 305 can be used to create an automatic infeed station 317. This will allow for an electronic device to automatically enter the magnetic movement table 303.

The magnetic movement table 303 is configured with different test stations positioned around its edges. In other embodiments, this allows for the test stations to be modularly attached. In the embodiments where the test stations are modular, the stations are designed to be removably secured to the frame 301 of the testing system. In one embodiment, the test stations are configured with their own power sources, computers, or other necessary equipment. In another embodiment, the modular test stations are connected to the magnetic table's existing infrastructure.

The modular test stations may include:
1) A screen touch test station 310. The screen touch station 310 may include a touch tip stylus, which can be used to touch a phone screen and have the touches recorded.
2) A screen picture test station 311. The screen picture test station 311 may include an enclosure that a magnetic mover may move in and out of.
3) A test station for speaker and microphone testing 312. The speaker and microphone test station 312 may include a movable sound reduction chamber that can rise and lower from the magnetic movement table.
4) A button touch test station 313. The button touch test station 313 is configured with the necessary components to test the phones' external buttons. These buttons can include the volume buttons, power buttons, silence switch, and home button.
5) A front camera test station 314. The front camera test station 314 allows a front camera on an electronic device to be tested.
6) A rear camera test station 315. The rear camera test station 315 is configured to pick the electronic device up so that the rear camera is exposed.
In some embodiments, multiple stations can be combined into a single modular station. This can allow for more stations to be included on a smaller magnetic movement table 303.

The magnetic movement table 303 may, in some embodiments, have additional stations. For example, an electronic device positioning and securement station 316 may be included on the magnetic movement table 303. This will help ensure the electronic device is correctly positioned on the magnetic mover. Further, in some embodiments, an automatic outfeed station 318 can be included. This will allow for the electronic device to be removed from the magnetic movement table without human intervention.

Specifically shown in FIG. 3C in one embodiment, the magnetic mover 304 includes a Near Field Communicator (NFC) 306. The NFC 306 can be used to test an electronic device's NFC. In one embodiment, an electronic device can be tested by being placed over the NFC 306 of the magnetic mover 304. The electronic device can then perform and active read using its NFC device. If the value of the read matches the NFC on the magnetic mover 304 then the electronic device is functional and passes the test.

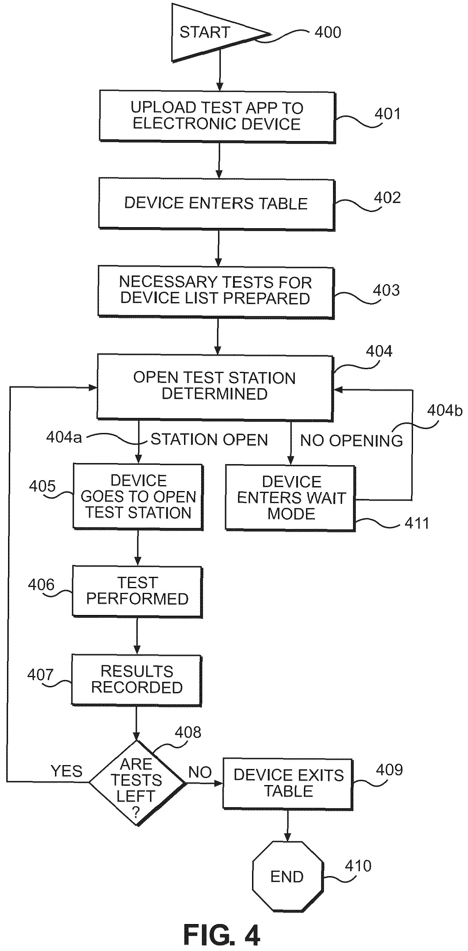

Referring now to FIG. 4, there is shown a flow chart of an embodiment of a method for testing an electronic device using the testing system. The method for testing an electronic device starts at 400 by uploading a mobile application to the mobile device 401. The mobile application will, at a minimum, facilitate communication between the testing system and the mobile device. In most embodiments, the mobile application will enable wireless connectivity between the computers of the respective device and system. A well-known industry wireless protocol, such as Wi-Fi or Bluetooth, can further facilitate this connection.

In one embodiment, the mobile application allows the mobile device to act as the primary computer during the testing process. For example, the testing application can be used to have the mobile device keep track of which tests are needed, which have been completed, and their results. The electronic device can then communicate with the computer of the testing system and be routed to the next available testing station. The mobile application can then upload all of the testing results to a database, as desired by the user, after all tests have been completed. Another upside is the ability to immediately exit the table after a single failed test, without the need for back-and-forth communication.

In one embodiment, the mobile application is uploaded before the electronic device enters the testing system table. After the mobile application is uploaded, the electronic device enters the testing system table 402. In some embodiments, the electronic device may enter the testing system table and then have the mobile application uploaded to the electronic device. In this embodiment, the electronic device may be directed to a holding area as soon as it enters the testing system table until a successful download is confirmed.

Once the mobile application has been successfully uploaded to the electronic device 401 and the electronic device has entered the testing system table a list of necessary tests to be performed on that electronic device 403 is prepared. The testing system then determines the next needed testing station for the next available test station that the electronic device needs to visit, 404.

In one embodiment, the determination of an available test station for the electronic device to visit is performed in a series of steps. This can limit the need for immense computing power. In this embodiment, the list of tests is further broken down into tasks associated with each test. The testing application then repeatedly asks whether a test is ready to be started. This determination is made by checking whether prerequisite tasks are completed. A prerequisite in this example could be that the electronic device is located at a test station, as in step 405.

If a needed test station is open, 404a, the electronic device goes to that station, 405. Once there, the test can be performed 406 and the results are recorded 407. The electronic device then asks whether any additional tests remain to be completed. If there are tests on the list, then the electronic device again asks the testing system for the next available testing station 404. If there are no tests to complete or if the device experiences a critical failure, the device exits the table at 409, and the method ends at 410.

In an embodiment in which there are no immediately available testing stations 404b, after step 404, the electronic device enters a waiting mode 411. In one embodiment, this means that the electronic device moves to a waiting area on the testing system. In another embodiment, this may mean that the electronic device exits the table and goes to a queue to re-enter the table when a needed testing station becomes available.

In one embodiment, this method is completed using the following hardware configuration. This method can be run with a different hardware configuration, and this is only one example of how it may be run. The electronic device and testing application can repeatedly talk to a first computer. This communication can comprise the testing application asking what test to run and communicating test results to the first computer. The first computer can also then talk to a magnetic movement table computer. The magnetic movement table computer can track the location of the electronic device and its movements on the table. This will enable the first computer to keep track of the lists of tests or tasks as described above.

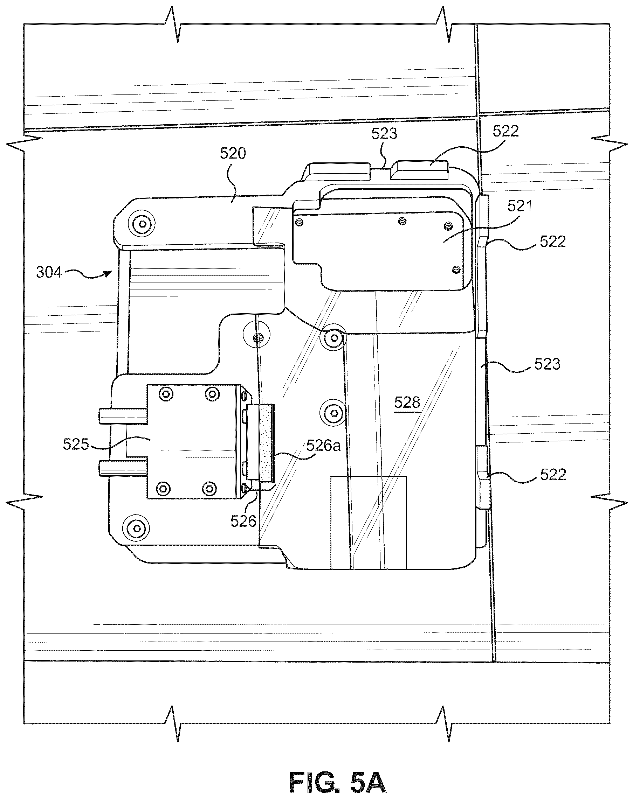

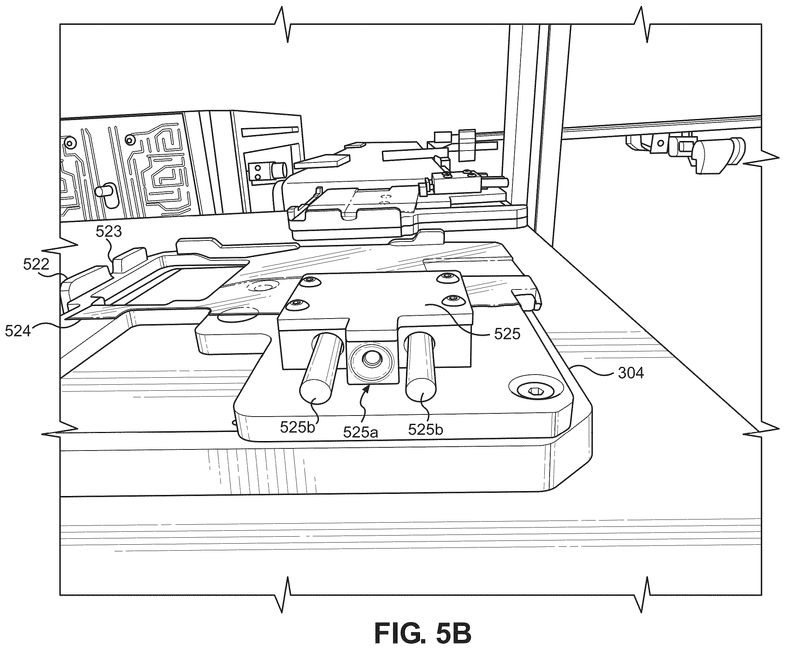

Referring now to FIG. 5A and FIG. 5B, there is shown a top-down view and a side view of an embodiment of the magnetic mover. The magnetic mover 304 comprises a magnetic component that is repelled from the surface of the magnetic movement table and then moved around the table. Atop the magnetic mover is a securement section 520.

The securement section includes a plurality of side stoppers 522 having openings 523 therebetween. The side stoppers 522 will prevent the electronic device from sliding from the securement section. The openings 523 allow for the buttons and other components of the electronic device to be accessible while the device remains secured within the securement section 520.

In some embodiments, different materials 524 are added to the top surface of the securement section 520. These materials 524 may be used to change the properties of the surface. For example, a material 524 may be chosen to adjust the coefficient of friction. A material 524 may be added, which reduces the coefficient, thereby allowing a mobile device to slide onto the securement section more easily than without the material 524.

Apposed to at least one side stopper 522 is a vise 525. The vise 525 includes a pressure device 526. In one embodiment, the pressure device includes a compressible section 526a. The compressible section 526a allows the vise to be tightened against an electronic device without fear of damaging it.

The vice also includes a ratchet 525a. In some embodiments, the head of the ratchet is located in a tapered opening. In one embodiment, the ratchet 525a is a screw. In one embodiment, the ratchet 525a is a combination screw and nut assembly. When the ratchet 525a is spun in a first direction, the vise will move in a first direction; when the ratchet 525a is spun in a second direction, the vise will move in a second direction opposite the first direction. In some embodiments, the vise 525 includes stabilizing rods 525b. The stabilizing rods 525b will prevent the pressure device from shifting or angling when it is used to secure an electronic device.

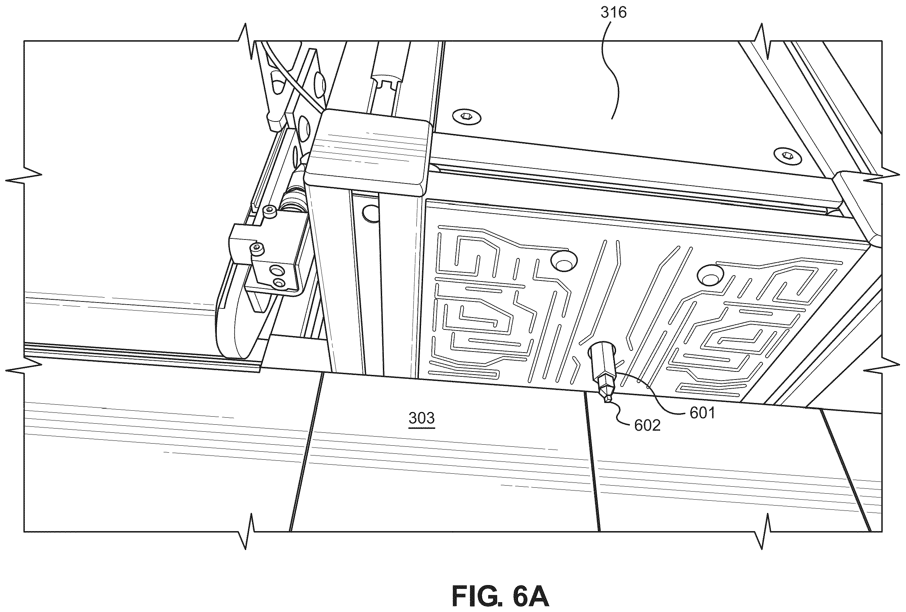

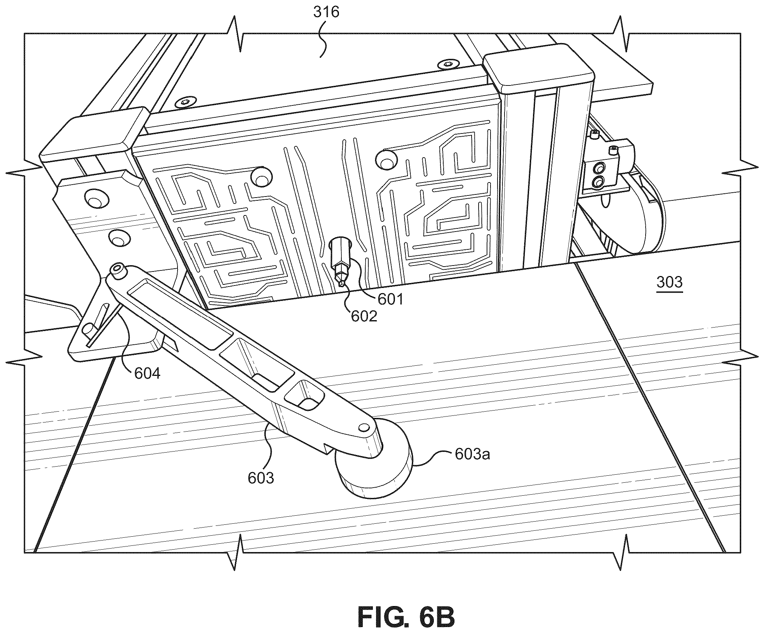

Referring now to FIG. 6A and FIG. 6B, there are shown perspective views of an embodiment of a device securement station. In some embodiments, a securement station 316 can be used to secure an electronic device in the securement device of the magnetic mover. In yet further embodiments, this securement station can be abutted to a magnetic movement table 304. The securement station 316 can be fully modular and self-contained. This allows the securement station to be easily added or removed from a desired location.

The securement station 316 includes a shaft 601 configured to rotate. The shaft may be connected to any number of motors, which will rotate the shaft as needed by a user. One of ordinary skill in the art will be able to determine which type of motor will work best for their chosen use. A tool head 602 is secured to the end of the shaft 601. The toolhead 602 is configured to correspond to the ratchet of the securement device.

In some embodiments, the securement station 316 includes a positioning device 603. The positioning device ensures the electronic device is appropriately located on the magnetic mover. The positioning device includes a wheel 603a. The wheel 603a prevents the positioning device 603 from knocking the electronic device out of place when the mover enters the securement station 316, as the electronic device's charging adapter protrudes from the charge port. The wheel 603a prevents the dislocation by rotating when it meets the charging adapter. In some embodiments, a spring 604 can be used to bias the positioning device towards the location where an electronic device and magnetic mover will enter.

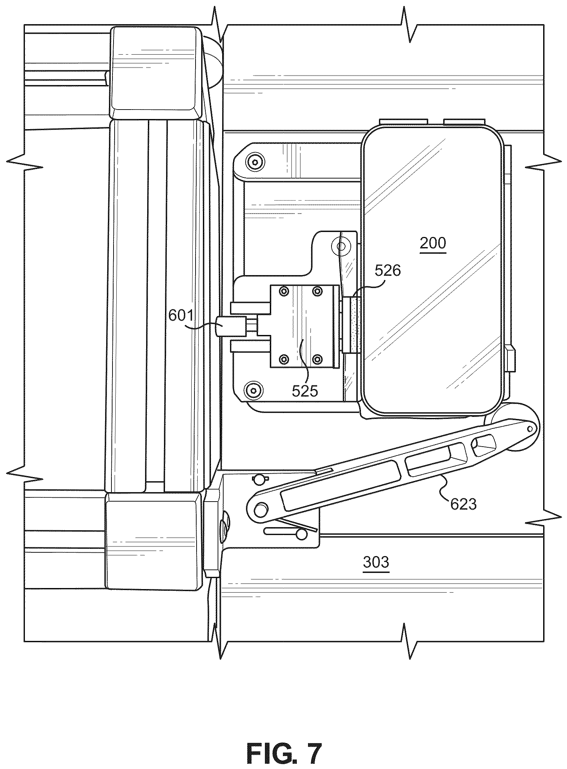

Referring now to FIG. 7, there is shown a perspective view of an embodiment of a device securement station and magnetic mover. In use, the magnetic mover 304 on the magnetic movement table 304 will move into the securement station 316. In the embodiments, the positioning device contacts the electronic device 200 and ensures it is appropriately positioned.

The ratchet of the vise 525 is coupled with the shaft 601. As the shaft 601 is rotated, the pressure device 526 extends toward the electronic device, pinning it between the pressure device 526 and the at least one side stopper 522. In order to release the pressure and allow for the electronic device 200 to be removed, the shaft 601 is rotated in the opposite direction.

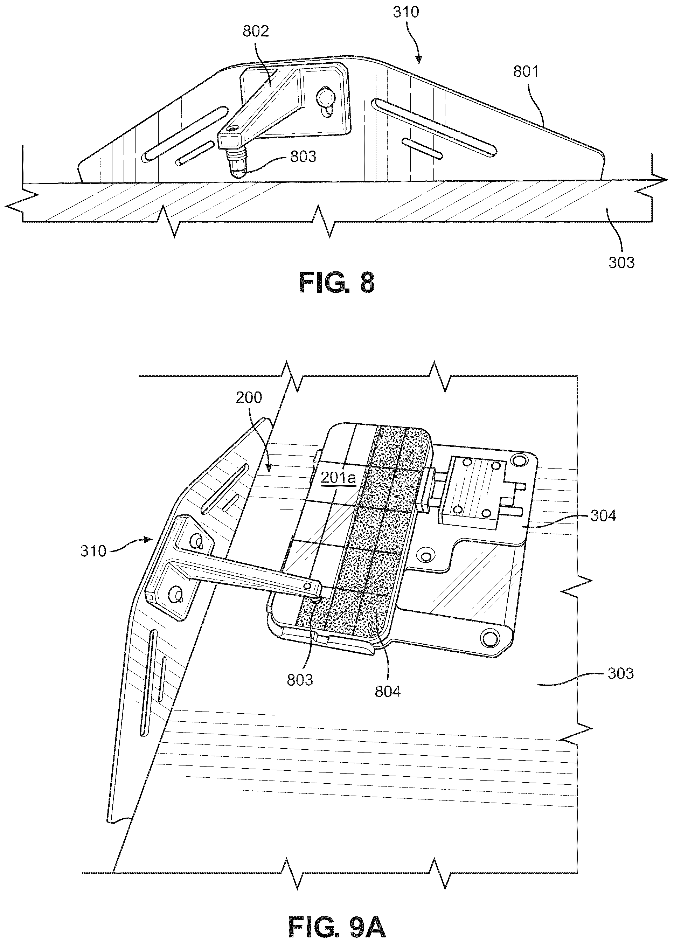

Referring now to FIG. 8, there is shown a perspective view of an embodiment of a touch screen testing station. The touchscreen testing station 310 is configured to sit on a magnetic movement table 303. The magnetic movement table 303 allows an electronic device to be moved about the station as described below.

The touch screen testing station 310 includes a bracket 801. The bracket 801 is configured to be removably coupled to the magnetic movement table 310. This allows the touchscreen testing station to be modular and placed at many different locations around the magnetic movement table 303.

An arm 802 is attached to the bracket 801. The arm 802 protrudes out from the bracket 801 and over the magnetic movement table 303. By protruding over the magnetic movement table 303, the arm 802 allows any number of different-sized electronic devices to be tested using the same touch-screen test station 310.

Attached to the arm 802 is a touch tip 803. The touch tip 803 is configured to operate a touchscreen on an electronic device. One of ordinary skill in the art will be able to determine an appropriate touch tip 803 to use. In one embodiment, the touch tip 803 can be secured to the arm in an adjustable manner. This can allow a user or a mechanical device to raise or lower the touch tip 803 compared to the magnetic movement table 303.

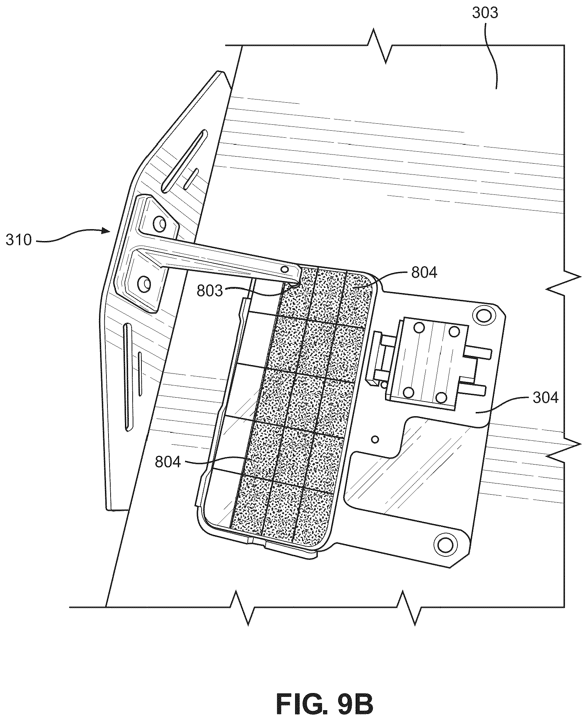

Referring now to FIG. 9A and FIG. 9B, there are shown top-down views of an embodiment of the touch screen testing station in use. In use, a magnetic mover 304 having an electronic device 200 secured thereto can enter the touch screen testing station 310. In one embodiment, the magnetic mover 304 is configured so that the front surface 201a of the electronic device points upward, away from the magnetic movement table 303.

In use, the magnetic mover 304 can move the electronic device beneath the touch tip 803. The electronic device 200 can register touches as the electronic device 200 is moved. In one embodiment, the magnetic mover moves in a grid pattern. This is shown by the rectangular shaded areas in FIG. 9A vs FIG. 9B. The electronic device 200 can show the touched spaces by displaying a color 804 on the screen in the locations that have been touched.

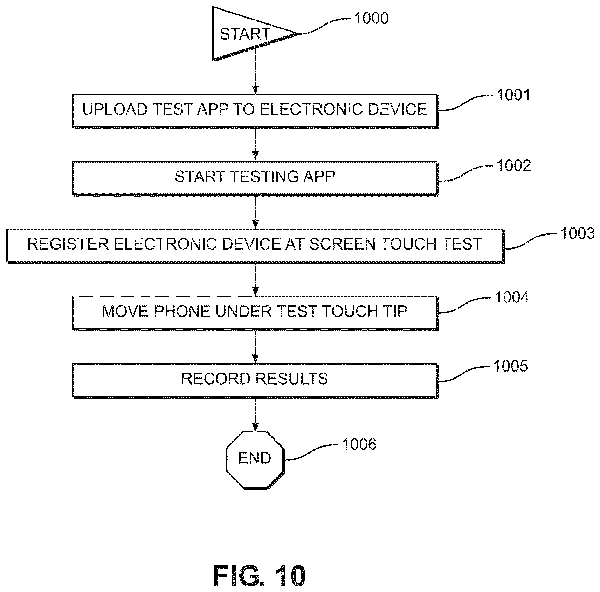

Referring now to FIG. 10, there is shown a flow chart of an embodiment of a method of using the touch screen testing station. The method for testing an electronic device's touch screen using the touch screen testing station starts 1000 by uploading a testing application 1001 to the electronic device. The testing application will allow the electronic device to act as its own testing computer. The testing application can thus be used to register screen touches and display outputs.

After a successful upload of the testing app 1001, the testing app must be started 1002. When the electronic device moves to the touchscreen test station, the electronic device is registered as being at that test station 1003. In one embodiment, this is accomplished by having the electronic device communicate with the computer of the magnetic movement table. In this embodiment, the magnetic movement table can determine the exact position using the magnetic mover.

In one embodiment, when the electronic device is registered as being at the test station, the computer sends testing information to the electronic device via the testing application. For example, the computer can send the correct display configuration to the electronic device. This can be a grid pattern. In the case of a grid pattern, the grid needs to have dimensions set out based on the size of the display of the electronic device.

The magnetic mover moves the electronic device under the touch tip of the touch screen test station 1004. In one embodiment, the testing app determines when the touch tip has touched a portion of the screen and registers it as each area is touched. In one embodiment, the touch screen displays the areas that have been registered as properly touched.

In order to best determine the results of the touch test, it is best to have a predetermined path for the electronic device to be touched. In one embodiment a snake pattern can be used (moving first up one column, then down the next, and up the third, ect. until the entire display has been tested). In some embodiments a visual representation of the touch test can be applied to the electronic device. In one embodiment the grid, or other desired pattern can be display and made to change colors. In this embodiment a first color, grey for example, can represent not touched areas, a second color, green for example, can represent properly touched areas, and a third color, red of example, can represent improperly touched areas. In one embodiment a touch timeout can be applied to the test. If an area is not touched within a predetermined length of time form the test start the test fails. This timeout could be applied to the overall test, or to each defined section.

In one embodiment when using a magnetic movement table a calibration needs to be briefly applied before the testing occurs, this helps prevent false failures. In this embodiment a Z coordinate is adjusted for the proper height based on the thickness of the electronic device. In one embodiment a first section is checked to ensure it is touched when expected. If this passes then the test is conducted.

After the touch test sequence 104, the test results are recorded in 1005. In one embodiment, the results are pass or fail. In another embodiment, the results are based on a percentage of successful touches. For example, the number of successful touches divided by the total touches, multiplied by 100. In another embodiment, the failed sections are also recorded. In one embodiment, the results are saved to the electronic device. In another embodiment, the results are uploaded to a management system that tracks the device and its test results. After the test results are recorded, the electronic device exits the touch-screen test station, and the method ends 1006.

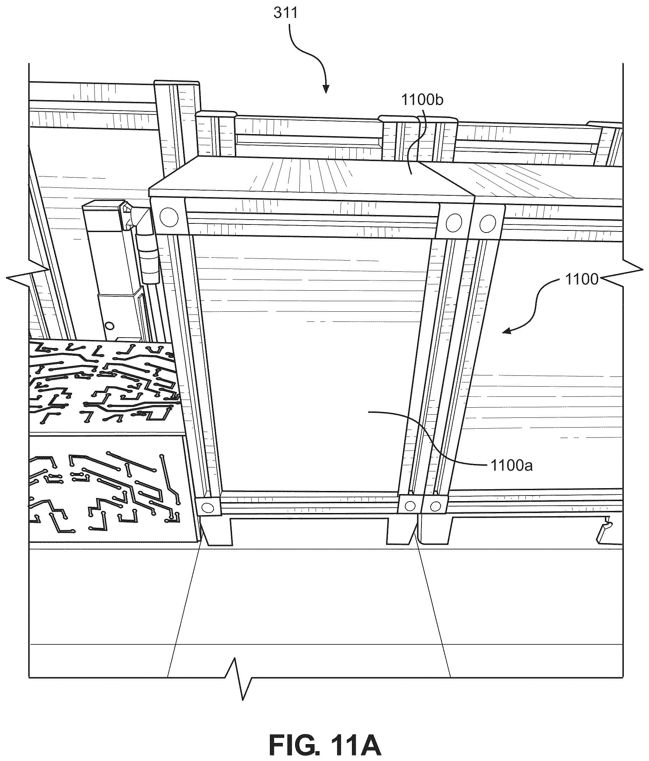

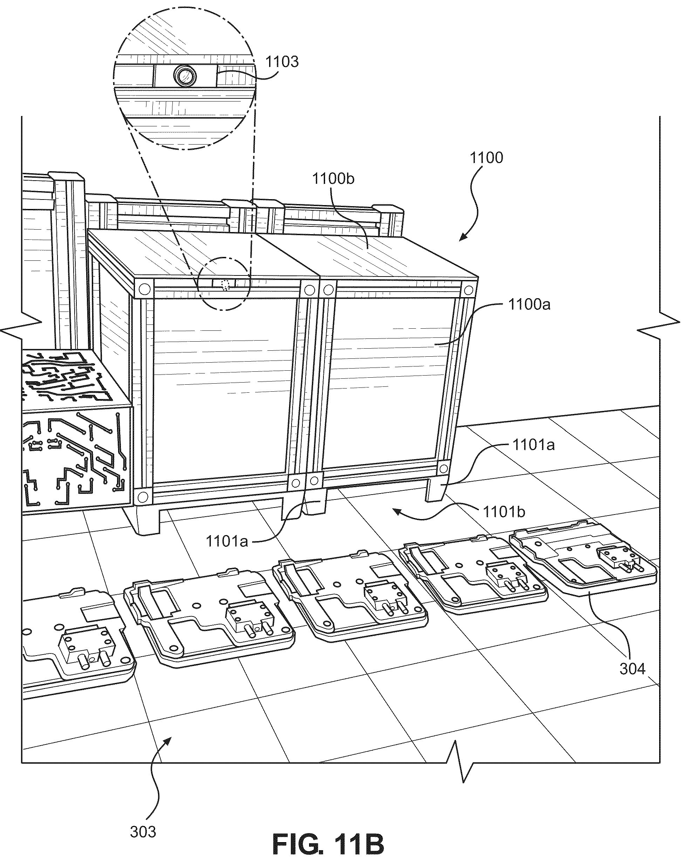

Referring now to FIG. 11A and FIG. 11B, there is shown a perspective view of an electronic device screen pixel check station. The electronic device screen pixel check station 311 includes an enclosed chamber 1100b. The chamber 1100 includes a plurality of sidewalls 1100a and a ceiling 1100b. The chamber 1100 is situated on a magnetic movement table 303. This allows for a magnetic mover 304 to enter the chamber.

In one embodiment, the chamber 1100 is secured to a base 1101. The base 1101 includes a plurality of sidewalls 1101a and an opening 1101b. In some embodiments, the base 1101 can allow for a better placement on top of the magnetic movement table 303 by being able to have a custom base created. In some embodiments the base 1101 has an opening 1101b. The opening is sized to allow a magnetic mover 304 carrying an electronic device to ender the chamber 1100. In some embodiments this opening 391b can be placed directly into one of the sidewalls 1100a of the chamber 1100.

The chamber 1100 is configured to restrict light from entering the interior of the chamber 1100. This purpose will be elaborated below in the method of using the electronic device screen pixel check station. The chamber 1100 has a camera 1103 placed within. The camera 1103 is placed such that it is in a position to take at least one picture of the screen of an electronic device. In some embodiments this means the camera 1103 is secured to the ceiling 1100b of the chamber 1100 and is pointed downward toward the magnetic movement table 303.

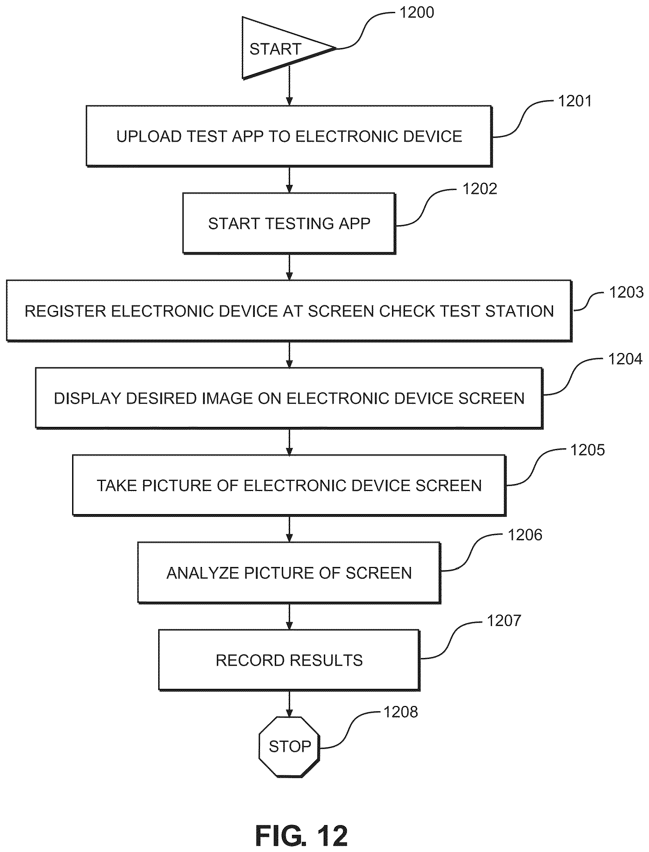

Referring now to FIG. 12, there is shown a flow chart of an embodiment of a method of using the electronic device screen pixel check station. The method for checking the pixels of an electronic device screen starts 1200 when a test application is uploaded to an electronic device 1201. Once successfully uploaded to the electronic device the test application is started 1202. In some embodiments the test application has been previously uploaded and started. In these embodiments the method may begin when the electronic device registers that it is located at the screen pixel check station 1203.

Once the electronic device is at the testing location and the magnetic mover properly positions the electronic device under the camera within the chamber. The testing application then has the electronic device display a desired screen 1204. In one embodiment the screen displays a lighted all black screen. In another embodiment the screen displays a white screen. White has the benefit of being easier for a computer to analyze. However, any desired screen could be used for this test. In some embodiments the app must override system UI elements to achieve true full-screen display.

After the desired screen is displayed 1204, at least one picture is taken of the electronic device screen 1205. In one embodiment at least one picture is taken of several different displays. In some embodiments these displays can include solid colors for dead pixel detection (green, blue, white), dark screens for backlight bleed testing (black, grey), and geometric patterns for edge detection and uniformity analysis. The at least one picture is taken such that the entire screen is captured. This will allow for the entire screen to be analyzed.

After the picture is taken, the image is analyzed 1206. In one embodiment, the image is analyzed by dividing the image into pixels. In one embodiment, an analysis similar to the one found in U.S. Patent No. 12,013,602 , herein incorporated by reference including any additional family members of the same, for example, U.S. Patent Application No. 18/660,296, can be completed. However, other photo-analysis methods can be used to identify defect areas.

Once the picture is analyzed, it is determined whether the screen contains defective pixels. Once this determination is made, the results are recorded 1207. In one embodiment, the results include coordinates of defective pixels. This allows the test results to be associated with the electronic device. After the test results are recorded 1207 then the method ends 1208.

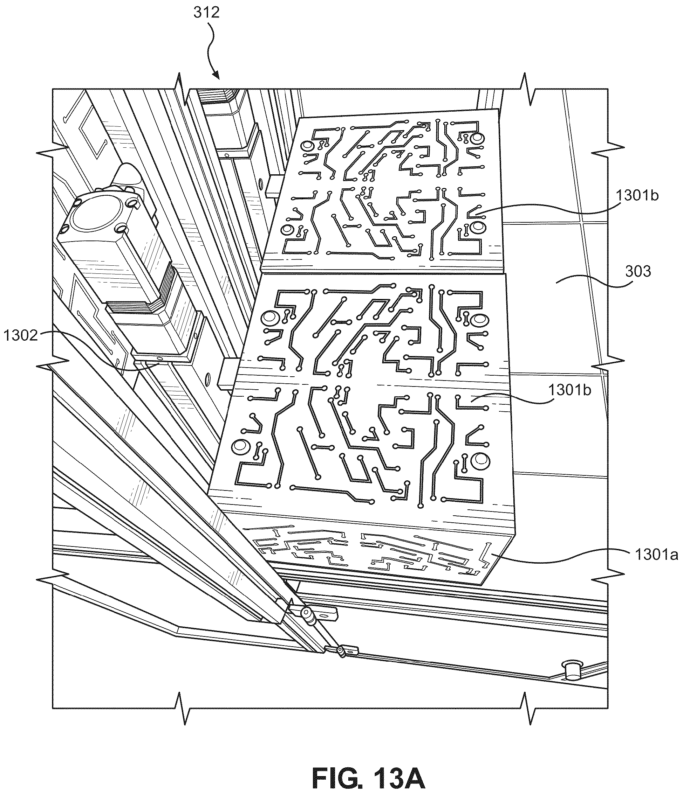

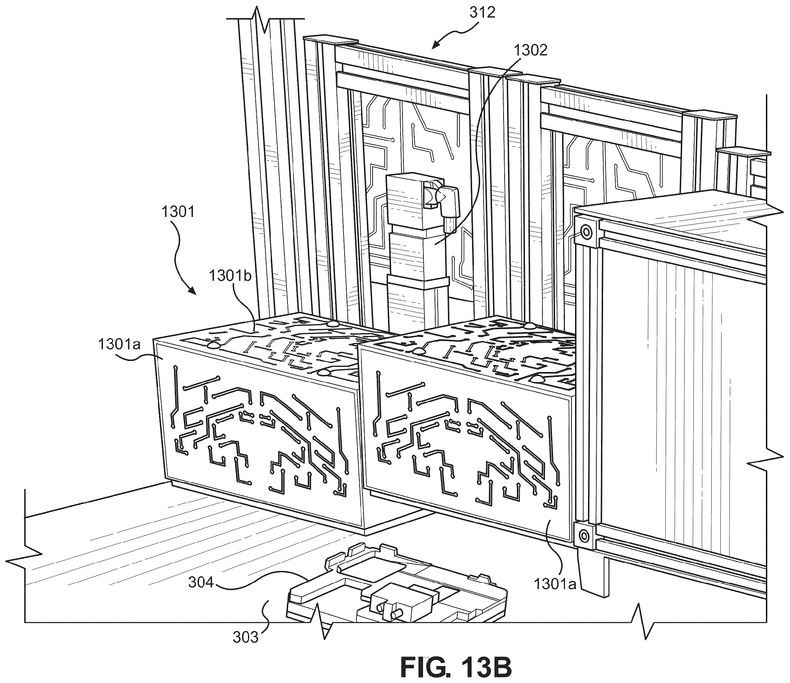

Referring now to FIG. 13A and FIG. 13B, there is shown a perspective view of an embodiment of a speaker and microphone test station. The speaker and microphone test station 312 is designed to sit atop a magnetic movement table 303. In the shown embodiment, there are two speaker and microphone test stations 312 positioned side by side.

Each is comprised of a movable housing 1301 having a plurality of sidewalls 1301a and a ceiling 1301b. The side not shown, facing the magnetic movement table 303, is open. In some embodiments the sidewalls 1301a and the ceiling 1301b includes noise reduction material. This will allow for the interior of the movable housing to remain significantly sound proof when the speaker and microphone testing station 312 is in use.

The movable housing is secured to a movement device 1302. In different embodiments, different movement devices 1302 may be used. In the shown embodiment, a motor is used. In other embodiments, actuators, hydraulics, robot arms, or other such devices may be used.

The movement device 1302 is configured to raise and lower the movable housing 1301, unlike the magnetic movement table. In use, the movement device 1302 can raise the movable housing 1301 from the magnetic movement table, at least high enough to allow for a magnetic mover 304 carrying an electronic device to move thereunder. The movable housing 1301 can then be placed back on the magnetic movement table 303, creating a sealed compartment. This will create a sound barrier around the electronic device to be tested.

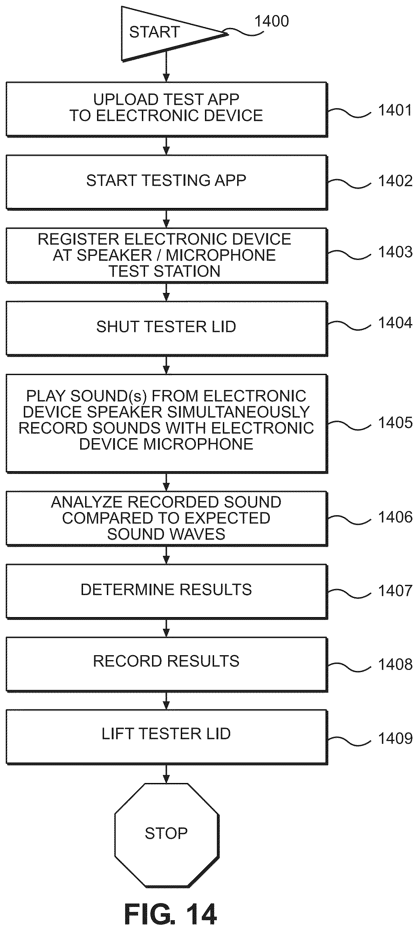

Referring now to FIG. 14, there is shown a flow chart of an embodiment of a method of using the speaker and microphone test station. The method starts at 1400 by uploading a test application to the electronic device to be tested at 1401. In some embodiments, the testing application is previously uploaded 1401 from a previous test discussed in the related applications. After the testing application is uploaded, the application must be started 1402.

The electronic device is registered at the speaker and microphone test station 1403. The electronic device is then located under the test lid via the magnetic movement table. Once properly located, the tester lid is closed about the electronic device 1404. This will allow for the test to be conducted while background noise is eliminated or at least lessened.

Once the test station is prepared and the lid is closed 1404 the testing can begin. The testing begins by playing a sound from the electronic device's speakers. Simultaneously, the electronic device's microphone records the sound from the speakers 1405. For a general electronic device that includes 2 speakers and 3 microphones, this will create 6 test combinations:
a) Speakerphone + Bottom Microphone
b) Speakerphone + Front Microphone
c) Speakerphone + Back Microphone
d) Earpiece + Bottom Microphone
e) Earpiece + Front Microphone
f) Earpiece + Back Microphone

By using the electronic device's speakers and microphone, both can be tested at once. Further, this eliminates the need for separate speakers and microphones within the test station. In one embodiment, the test uses precisely generated audio tones rather than music or speech. These tones can thus have exact known frequencies and are then easier to analyze. However, other sounds can be used as desired. The testing app can then trigger the simultaneous play and recording of the desired sound.

The recorded sound is then analyzed and compared with the expected results of recording 1405. To conduct this analysis, the sound played from the device's speakers is first graphed as a wave. The wave can then be used as the baseline for the test. The recorded sound is then also turned into a wave. Once both the recorded and played sounds have been graphed, these graphs can be compared 1406. If the waves are within a predetermined range, then the device's speakers and microphone pass the test.

Once the recording is analyzed, the results are determined 1407. Once the results are determined, they should be recorded 1408. This will ensure that the results are associated with the electronic device as needed. After the results are recorded, the tester lid is lifted to allow the electronic device to move to the next needed location, 1409, and the method ends.

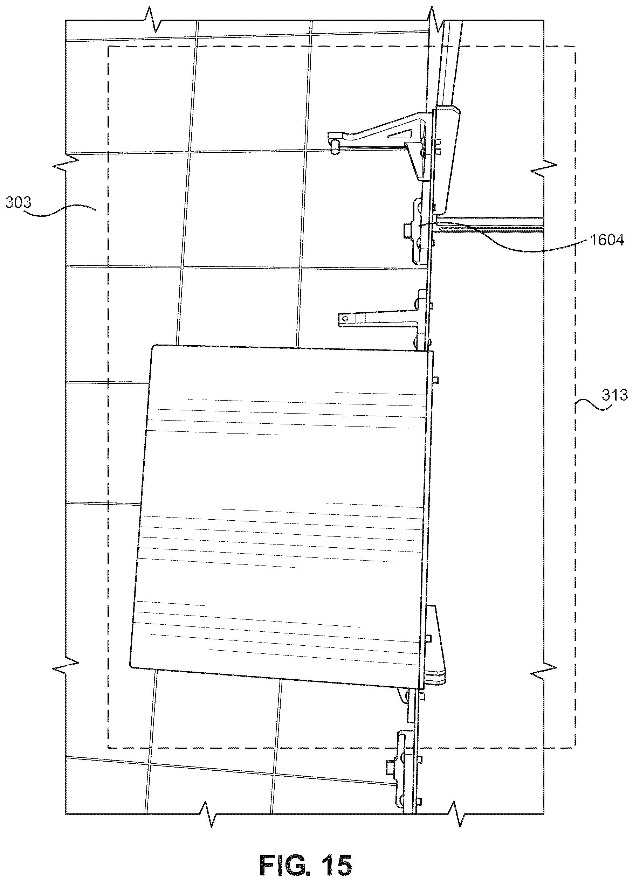

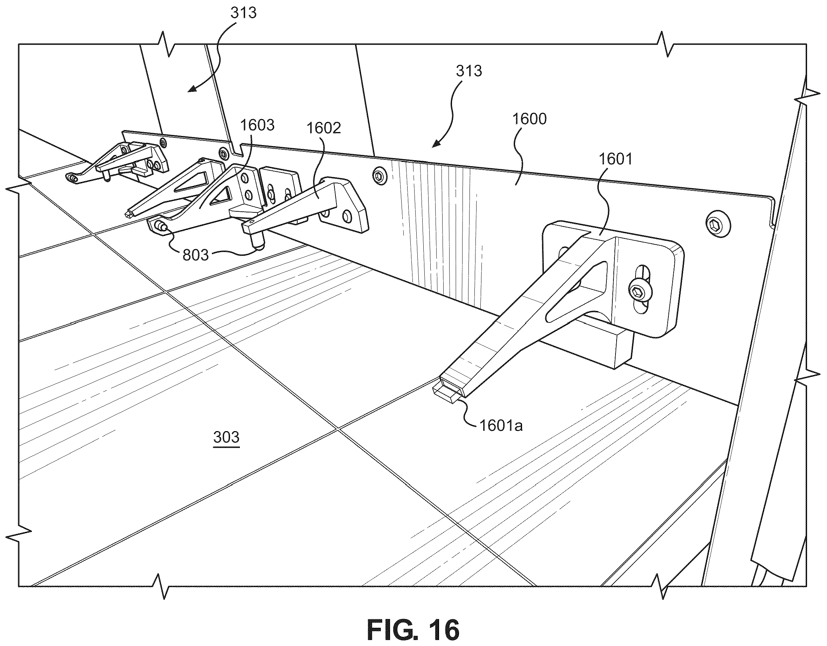

Referring now to FIG. 15 and FIG. 16, there is shown a top-down view and a perspective view, respectively, of an embodiment of a button test station. The button test station 313 is configured to be placed adjacent to a magnetic movement table 303. The button test station 313 is also a modular test station. This means that it can be placed at various locations along the magnetic movement table 303. The controlling computer of the magnetic movement table 303 can then associate the area with the tester. This allows a user to place any number of button test stations on magnetic movement table 303.

The button test station 313 includes a bracket 1600. In one embodiment, the bracket 1600 is configured to secure to the frame of the magnetic movement table. Further, the bracket 1600 is configured to have various button testing tools secured thereto. In one embodiment, this may be as simple as placing apertures in the bracket 1600. This will allow nuts and bolts to be used to secure the button-testing tools. In another embodiment, the apertures can be threaded to enable the screens to be used to secure button-testing tools to the bracket 1600 directly.

The button testing tools may include various designs to operate various buttons on electronic devices. The currently described tools allow for each button switch or side touch pad to be tested on an electronic device at the time of filing. However, one of ordinary skill in the art will understand how to modify the currently described tools to allow manipulation of future buttons. In some instances, a new button or switch may require creating a slightly different tool. However, the addition of such a tool would not depart from the present invention.

The shown button testing tools include a switch tool 1601. The switch tool 1601 includes a switching end 1601a. This will allow a switch to be moved by being over or under the switching end. This helps ensure that many different switch configurations can be moved for testing.

In some instances, an electronic device must be unlocked for the buttons to be appropriately tested. This is because the operating system does not register button presses when the device is locked and not ready for immediate use. Therefore, a screen touch tool 1602 can be included. The screen touch tool 1602 includes a touch tip 803. The touch tip 803 is configured to operate a touchscreen on an electronic device. One of ordinary skill in the art will be able to determine an appropriate touch tip 803 to use.

In some models, electronic devices have a touch slider located on the side of the device case. In order to test this slider, a side touch tool 1603 is needed. Therefore, in some embodiments, a side touch tool 1603 is secured to the bracket 1600. The side touch tool 1603 is similar to the screen touch tool 1602. The main difference is that the touch tip 803 is placed in a manner parallel to the magnetic movement table 303, so it is configured to touch the side of a device case.

The shown embodiment also includes a button-pressing tool 1604. The button-pressing tool 1604 includes a protrusion 1604a configured to press the buttons of an electronic device. The protrusion, as shown, is relatively short. However, any length may be sufficient to achieve the desired functionality.

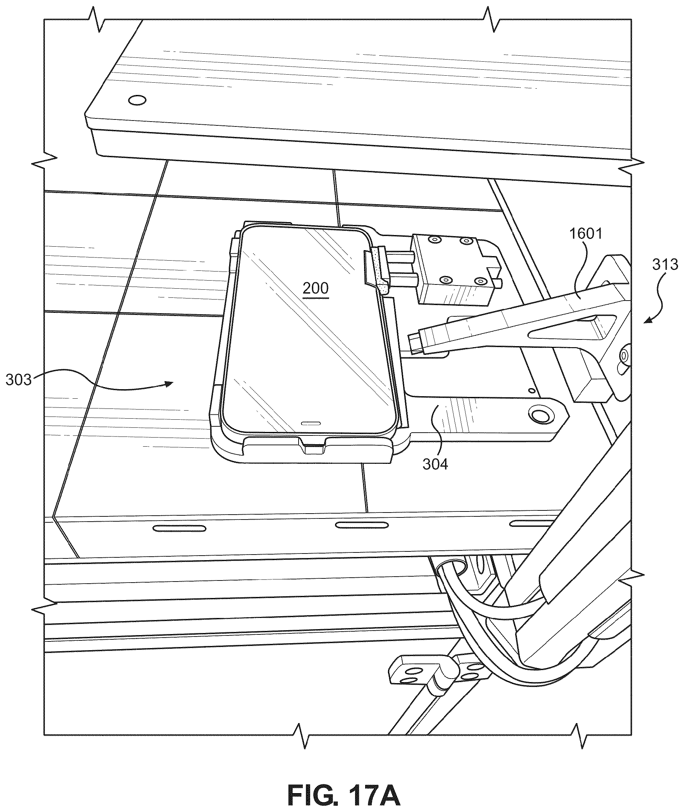

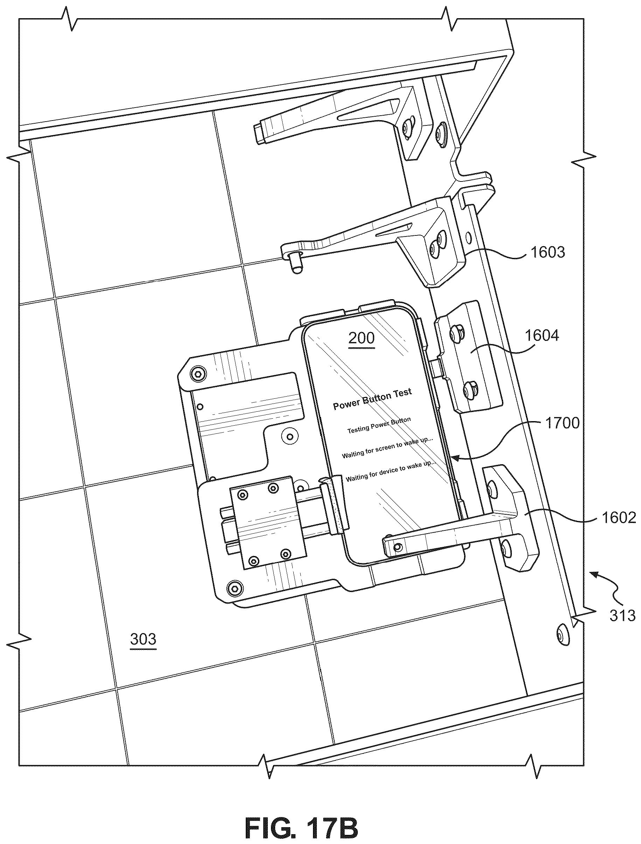

Referring now to FIG. 17A and FIG. 17B, there are shown perspective views of an embodiment of the button test station in use. In one embodiment, in order to test the buttons of an electronic device, a test application is used. The test application can record the various button manipulations. Further, in some embodiments, the test application can record and upload results to a master system. In one embodiment, the test application can display a GUI 540 on the electronic device. The GUI will enable a user to monitor the testing progression.

In use, a magnetic mover 304 having an electronic device 200 secured thereto is manipulated into the button test station 313 by the magnetic movement table 303. In one embodiment, the magnetic mover 304 can move the electronic device 200 into the switch tool 1601. In this embodiment, once the switch tool contacts the switch of the electronic device 200, the magnetic movement table 303 can cause the magnetic mover 304 to rise and lower, thereby flipping the switch.

In one embodiment, the electronic device must be unlocked for further testing. Therefore, in this embodiment, the magnetic mover 304 will move the electronic device 200 to the screen touch tool 1602. The touch tip 803 can then be used to unlock the electronic device 200. After the electronic device is unlocked, the remaining buttons can be tested.

In one embodiment, the power button and the volume buttons are tested using the button-pressing tool. In some instances, the electronic device 200 may need to be unlocked again after the power button test, as in many cases, the power button locks an electronic device. One model of an electronic device has a touch button on the case. The electronic device can be moved to the side touch tool 1603 so that this button or buttons can be tested.

In one embodiment, the test results may have been recorded by the test application on the electronic device. In this embodiment, the test results can then be uploaded to a database. In another embodiment, the test results are uploaded as the tests are conducted. After the buttons are tested and the results are satisfactory, the magnetic mover 304 can be removed from the button test station, and the electronic device 200 can be removed.

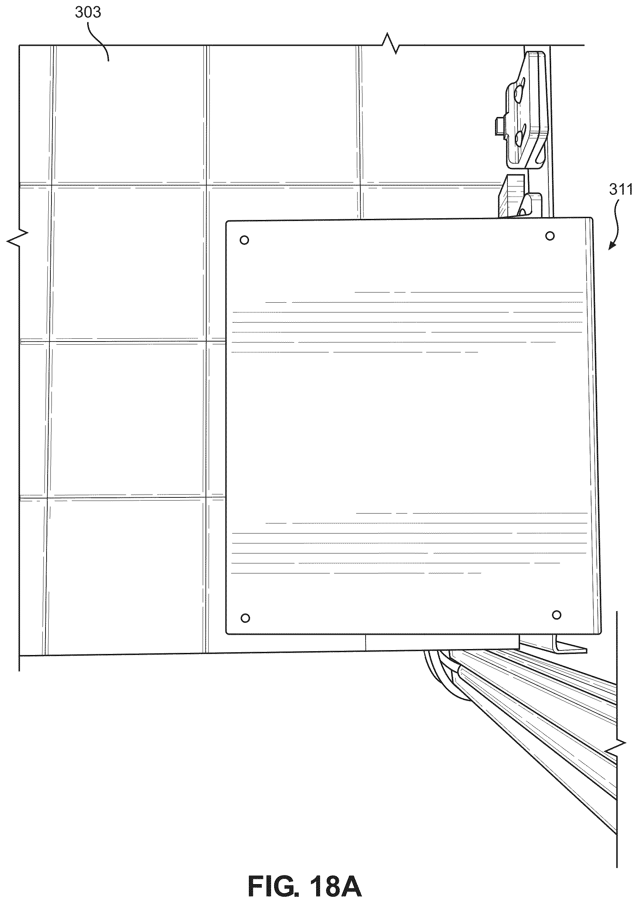

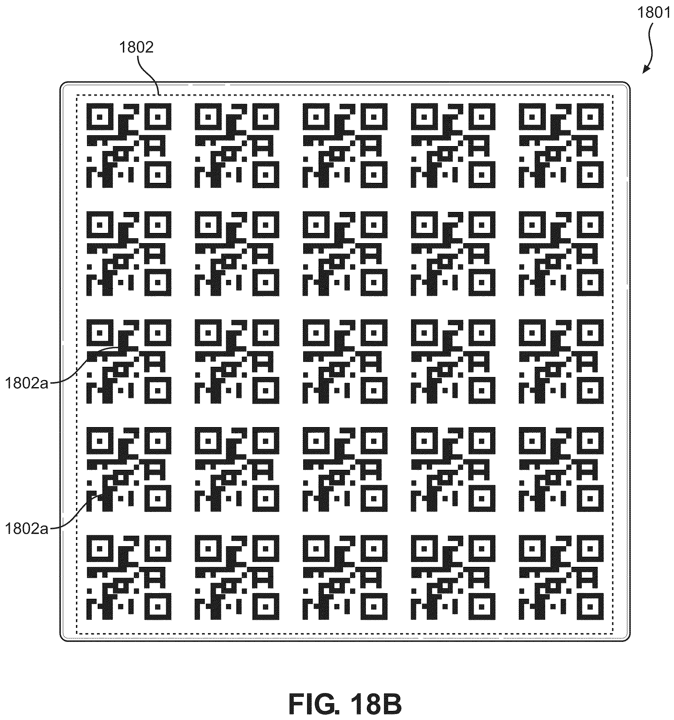

Referring now to FIG. 18A and FIG. 18B, there is shown a top-down and a bottom-up view, respectively, of an embodiment of an electronic device front camera test station. The electronic device front camera test station 314 can, in many embodiments, be kept simple, as much of the testing can be performed by software after taking a picture of a known element. In one embodiment, the electronic device front camera test station 314 includes a planar structure 1801 that overhangs a magnetic movement table 303. The planar structure 1801 is arranged so that a magnetic mover and an electronic device can be moved thereunder. Further, the planar structure 1801 is of a height that allows an acceptable picture of the underside (the side facing the magnetic movement table 303) to be captured by the electronic device.

The underside of the planar structure 1801 has an acceptable image target 1802 placed thereon. In the shown embodiment, the image target 1802 is a plurality of QR codes 1802a. These QR codes 1802a have a benefit of .... However, in other embodiments, images such as colored images of barcodes to perform an enhanced camera test or some other type of color codes can be used.

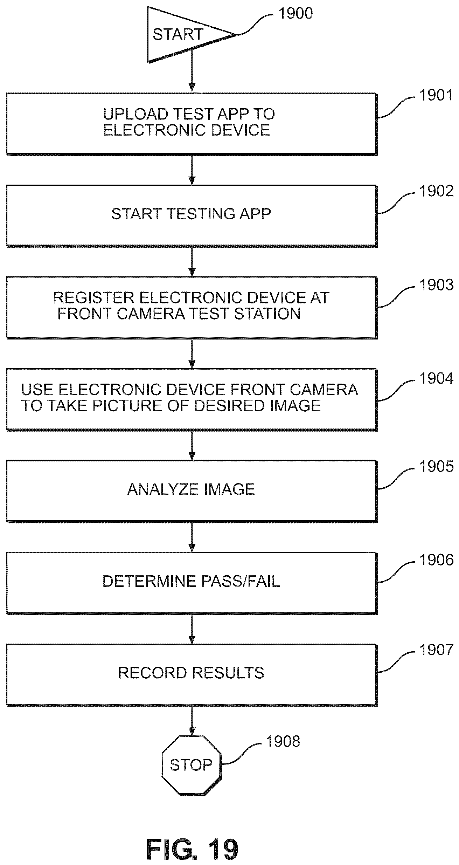

Referring now to FIG. 19, there is shown a flow chart of an embodiment of a method of using the electronic device front camera test station. The method for testing the front camera of the electronic device may be used to test various cameras, not limited only to the front camera of an electronic device. However, the front camera is used for the purpose of putting forth a clear and concise description. The method for testing a front camera of the electronic device starts 1900 when uploading an electronic device test application to the electronic device to be tested 1901. In some embodiments, the test application has been previously uploaded, and the method may begin by starting the testing application 1902. Even still, in some embodiments, the test application may already be uploaded 1901 and started 1902. Thus the method may begin by registering within the test application that the electronic device to be tested is at the electronic device front camera test station 1903.

In one embodiment, after the electronic device is located at the test station, it is properly positioned, and a picture is taken of the desired image on the underside of the planar structure 1904. In some embodiments, the test application may take multiple pictures as needed. After the photo is taken, the image must be analyzed 1905.

In one embodiment, the test evaluates not only a camera's photo quality but also its QR code scanner. This enables multiple functions to be tested at once. In one embodiment, the electronic device is instructed to look for QR codes by taking many pictures. The codes are then parsed through in order. If fewer than a predetermined number of codes are missed, the device passes the test. If too many QR codes are missed, the device may fail.

Once the image is analyzed, it is determined if the electronic device has passed or failed the test 1906. This will be determined based on a predetermined set of parameters, as described in the analysis description. The results are then recorded 1907. In one embodiment, the results are recorded in the test application. In another application, the results are sent to a testing management system. In other embodiments, other recording locations may be used as desired by the user. After the results are recorded, the electronic device leaves the test station, and the method ends 1908.

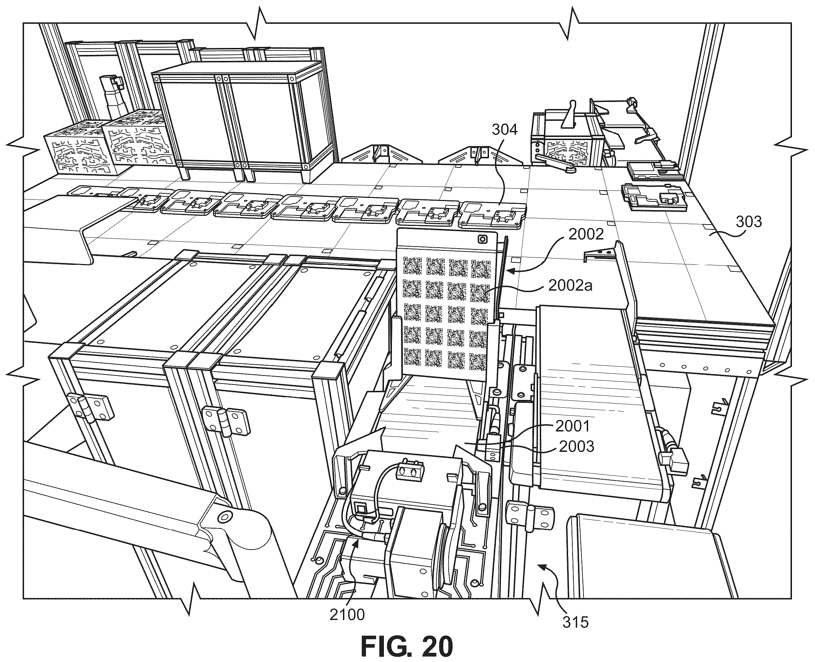

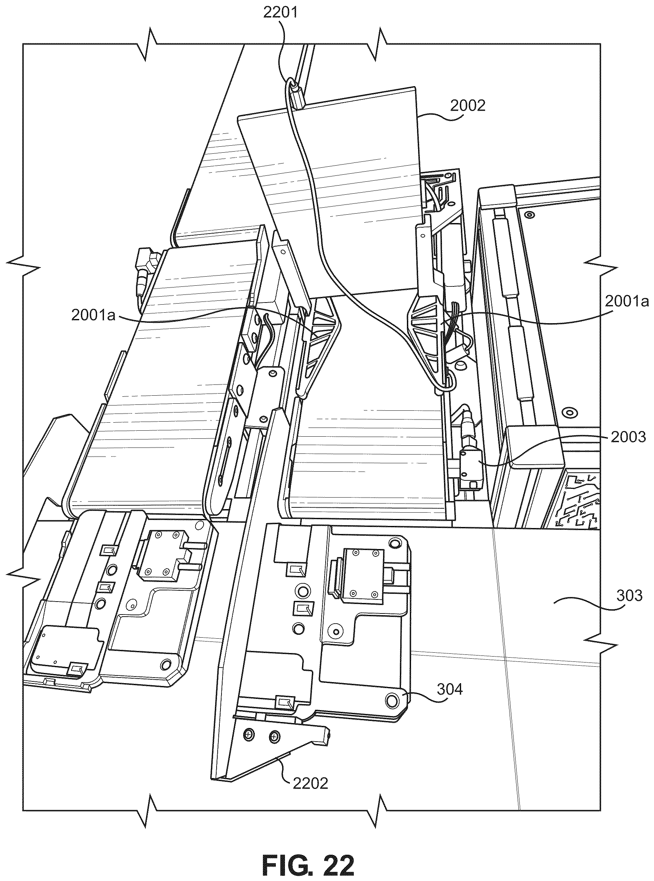

Referring now to FIG. 20, FIG. 21, and FIG. 22, there is shown perspective views of an embodiment of the electronic device rear camera test station. The electronic device rear camera test station 315 includes a conveyor 2001. The conveyor 2001 is used to remove an electronic device from the magnetic mover 304, which is located on a magnetic movement table. As seen in FIG. 22, a removal device (Use the same language from infeed outfeed) 2202 is positioned over the magnetic movement table 303 such that an electronic device can be removed from the magnetic mover 304 and placed on the conveyor 2001. This removal device 2202 and the method of removing the electronic device are fully described in U.S. Patent Application No. 19/403,363, titled electronic device infeed and outfeed apparatus for a magnetic movement table, which has been incorporated herein by reference.

Further, the conveyor 2001 is positioned so that the electronic device can be returned to the magnetic mover 304 after the camera test has completed. This process and conveyor position are fully described in U.S. Patent Application No. 19/403,363, titled electronic device infeed and outfeed apparatus for a magnetic movement table, which has been incorporated herein by reference.

In some embodiments, at least one sensor 2003 is placed about the conveyor 2001. The sensor 2003 can detect the presence of an electronic device. In the shown embodiment, at least one sensor 2003 is placed adjacent to the conveyor 2001. The at least one sensor 2003 can be used to activate or stop the conveyor 2001. In the shown embodiment, there is a sensor 2003 located at each end of the conveyor 2001. In this embodiment, depending on which sensor 2003 is activated first, the conveyor 2001 can be activated to move an electronic device from one sensor 2003 to the other. In this embodiment, the conveyor 2001 can be used to move the electronic device, both in and out of the electronic device rear camera test station 315.

In one embodiment, again as can be seen in FIG. 22, the conveyor 2001 has at least one device positioning apparatus 2001a positioned thereabout. The device positioning apparatus 2001a can be used to move or position an electronic device on the conveyor 2001. In the shown embodiment, there is a device positioning apparatus 2001a positioned on either side of the conveyor 2001. This places an electronic device in the center of the conveyor 2001. More uses for the device positioning apparatus 2001a will be discussed below.

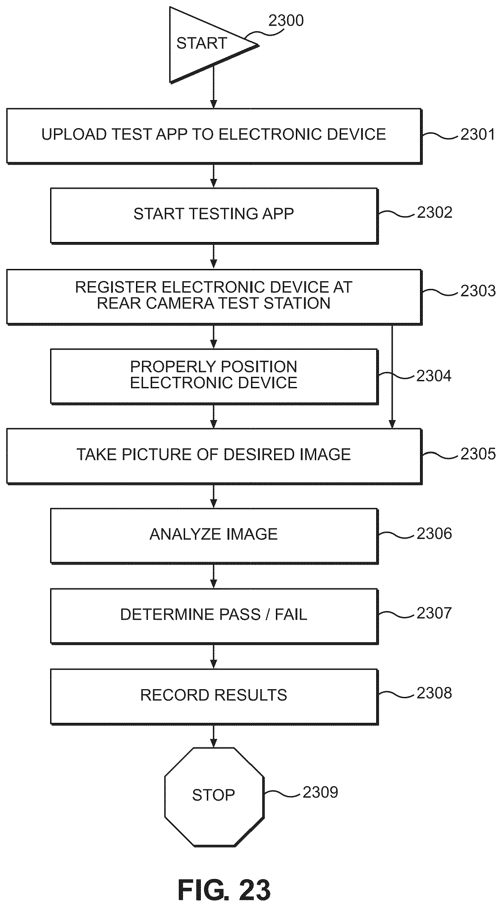

The electronic device rear camera test station 315 includes a camera target 304. In the shown embodiment, the camera target 304 is positioned above the conveyor 2001. This position allows for a more compact station. Further, this position allows for easy targeting using the electronic device's rear camera. More on this positioning will be described in the method described in the description of FIG. 23.

The camera target 2002 is used to have the desired camera under test take a picture of it. While this application is described as a rear camera test, any camera can be tested in this manner. The camera target 2002 may have different items placed thereon in order to allow the test to be conducted as described in the method description of FIG. 23. In the shown embodiment, a plurality of QR codes 2002a are positioned thereon. In the shown embodiment, the QR codes 2002a are shown in a rectangular configuration; however, other configurations can be used.

In one embodiment, the camera target 2002 may be lighted. In this embodiment, a power cord 2201 protrudes from the top of the camera target 2002. This allows the camera target to be lit and ensures the best possible picture of the camera target can be taken in 2002. However, it is contemplated that non-lighted camera target 2002 will work similarly to that of a lighted camera target 2002.

In the shown embodiment, an electronic device positioning apparatus 2100 is positioned at one end of the conveyor 2001. The positioning apparatus 2100 includes an actuator 2101. The actuator 2101 in the shown embodiment is used to tilt a housing 2102 of the positioning apparatus 2100. The housing 2102 includes an opening 2102a therein, which is configured to accept an electronic device securely. In this manner, the positioning of the camera of the electronic device is such that it can take at least one picture of the camera target 2002.

Referring now to FIG. 23, there is shown a flow chart of an embodiment of a method of using the electronic device rear camera test station. The method starts 2300 by uploading an electronic device test application to the electronic device to be tested 2301. In some embodiments, the test application has been previously uploaded, and the method may begin by starting the testing application 2302. Even still, in some embodiments, the test application may already be uploaded 2301 and started 2302. Thus the method may begin by registering within the test application that the electronic device to be tested is at the electronic device rear camera test station 2303.

In one embodiment, after the electronic device is located at the test station, it is properly positioned 2304. In one embodiment, this step includes the removal of an electronic device from a magnetic mover and its being moved to the conveyor. The conveyor then moves the electronic device toward the positioning apparatus. Once the electronic device is within the positioning apparatus, the electronic device is then positioned by the positioning apparatus 2304. In another embodiment, positioning may be done merely with the conveyor. In yet another embodiment, a robot of sorts may be used to properly position the electronic device 2304.

After the electronic is properly positioned 2304, at least one picture shall be taken by the electronic device 2305. In different embodiments, different items could be used as the photographic target. In keeping with the theme of the present application, at least one QR code will be used as the item for the picture.

After at least one picture is taken, an analysis is conducted 2306. In one embodiment, the camera test can verify that the back camera can focus appropriately and decode QR codes. This allows for multiple elements of a camera's capability to be tested at once. As mentioned, the back camera test station may display QR codes on its screen positioned at a desired distance from the electronic device.

For the back camera test, multiple QR codes are shown. The test can run at 30 frames per second with continuous analysis. When a QR code is detected, the app extracts its content and verifies that it matches the expected pattern. The test passes if an acceptable number of QR codes are detected with correct content. It fails if any QR code is missed, decoded incorrectly, or takes too long to detect.

After the analysis is completed, it must be determined if the camera has passed or failed the test 2307. This will be determined based upon a predetermined set of parameters as described in the description of the analysis. The results are then recorded 2308. In one embodiment, the results are recorded in the test application. In another application, the results are sent to a testing management system. In other embodiments, other recording locations may be used as desired by the user. After the results are recorded, the electronic device leaves the test station, and the method ends 2309.

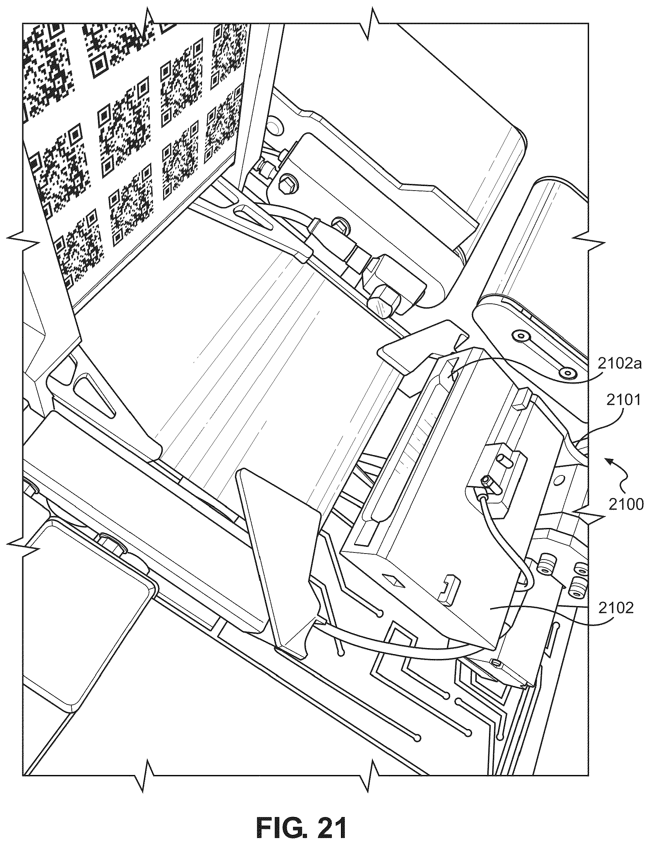

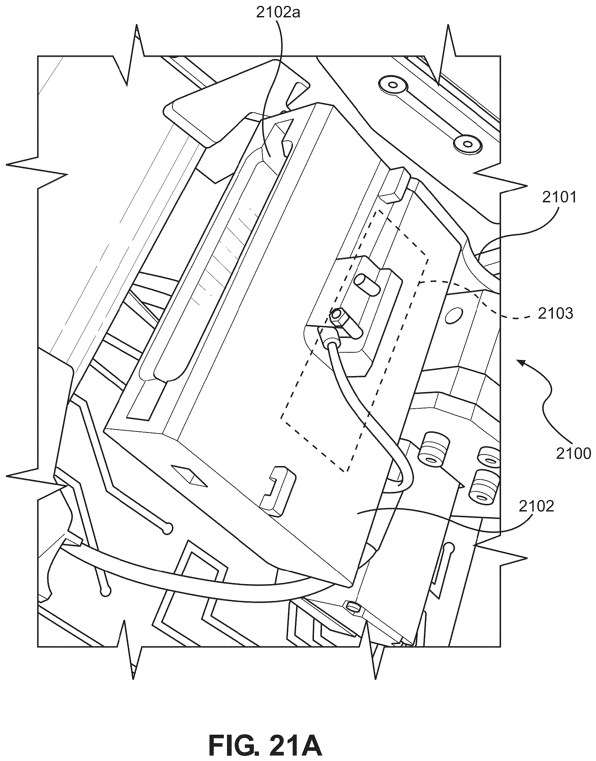

Referring now to FIG. 21A, there is shown an embodiment of the flipping something having a location sensor therein. The location sensor 2100a is positioned such that when an electronic device vibrates, the location sensor 2100a can determine a change in coordinates. For example, a test may begin with an electronic device being placed on the location sensor 2100a, which contains precision accelerometers. The station can thus calibrate for the device's weight and filter out environmental vibration. The electronic device's vibration feature can then be triggered. Vibrations of the electronic device create patterns. Therefore, by taking and caching a multitude of X, Y, and Z coordinates, a pattern can be determined and analyzed. This analysis can search through the created pattern and compare it to the pattern of a known good, similar device. If the tested device does not miss a pattern plot, then it passes. In one embodiment, a threshold may be used to determine if a device passes or fails the test. After completion of the test, the test results may be stored.

It is therefore submitted that the methods, systems, and devices have been shown and described in what is considered the most practical and preferred embodiments, along with specific examples. It is recognized, however, that departures may be made within the scope, and these present examples are not intended to be limiting. One of ordinary skill the art will be able to discern that obvious modifications can be made without departing from the scope or spirit.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention. Similarly, it is to be realized that it is not intended for any method set forth herein to be construed as requiring that its steps be performed in a specific order, unless otherwise set forth in the claims.

Therefore, the foregoing is considered as illustrative only of the principles of the disclosure. Further, since numerous modifications and changes will readily occur to those skilled in the art, it is not desired to limit the invention to the exact construction and operation shown and described, and accordingly, all suitable modifications and equivalents may be resorted to, and are deemed to fall within.

## Claims

1. A speaker and microphone test station for evaluating audio components of an electronic device, comprising:
a movable housing configured to form a sound-isolated chamber;
a movement device operably coupled to the housing and configured to raise and lower the housing relative to a magnetic movement table;
a computing system configured to initiate audio playback from the electronic device and record audio via the device's microphone; and
a signal analysis module configured to compare the recorded audio to expected audio characteristics.

2. The test station of claim 1, wherein the movable housing comprises a plurality of sidewalls and a ceiling lined with sound-dampening material.

3. The test station of claim 1 or 2, wherein the movement device comprises a motor, actuator, or robotic arm configured to position the housing over the electronic device.

4. The test station of any preceding claim, wherein the computing system is configured to trigger playback of predefined audio tones from the electronic device's speakers.

5. The test station of any preceding claim, wherein the computing system is configured to record audio using multiple microphones of the electronic device simultaneously.

6. The test station of any preceding claim, wherein the signal analysis module is configured to generate waveform graphs of the played and recorded audio and compare them for fidelity.

7. The test station of any preceding claim, wherein the movable housing is configured to seal against the magnetic movement table to reduce ambient noise during testing.

8. The test station of any preceding claim, wherein the computing system is configured to determine pass/fail status based on waveform similarity thresholds.

9. The test station of any preceding claim , wherein the test station is modular and configured to be positioned at various locations around the magnetic movement table.

10. A method of testing speaker and microphone functionality of an electronic device using a test station, comprising:
uploading a testing application to the electronic device;
positioning the electronic device beneath a movable housing on a magnetic movement table;
lowering the housing to form a sound-isolated chamber;
playing a predefined audio signal from the electronic device's speaker;
recording the audio signal using the electronic device's microphone;
analyzing the recorded signal against the expected signal; and
determining a pass or fail result based on the comparison.

11. The method of claim 10, wherein the audio signal comprises a set of tones with known frequencies.

12. The method of claim 10 or 11, wherein the analysis includes comparing waveform shape, amplitude, and timing.

13. The method of any of claims 10 to 12, wherein the method includes testing multiple speaker-microphone combinations, including:
speakerphone with bottom microphone,
speakerphone with front microphone,
speakerphone with back microphone,
earpiece with bottom microphone,
earpiece with front microphone, and
earpiece with back microphone.

14. The method of any of claims 10 to 13, further comprising uploading the test results to a remote database.

15. The method of any of claims 10 to 14, wherein the movable housing is raised after testing to allow the electronic device to proceed to a next test station.
